# EUROPEAN PATENT APPLICATION

(11) **EP 4 572 286 A1**
(43) Date of publication of application: **18.06.2025**
(21) Application number: 24218935.5
(22) Date of filing: 11.12.2024
(51) Int. Cl.: H04L 45/28, H04W 24/06, H04W 40/24, H04L 45/00

(54) **METHOD AND APPARATUS TO HANDLE PARTIAL DATA PATH FAILURE AT USER PLANE**

(30) Priority: 15.12.2023 IN 202321085843; 06.12.2024 US 202418971275
(71) Applicant: Mavenir Systems, Inc., Richardson, TX 75081 (US)
(72) Inventor: Mishra, Abhishek, Bangalore, Karnataka 562125 (IN); Padlikar, Vipin, Bangalore, Karnataka 560048 (IN); Jindal, Tamanna, McKinney, Texas 75070 (US)
(74) Representative: dompatent von Kreisler Selting Werner - Partnerschaft von Patent- und Rechtsanwälten mbB

(57) **Abstract**

A telecommunications system and method for identifying when a next hop is down by sending a first series of pings from a User Plane (UP) computer to the next hop, for incrementing a Key Performance Indicator (KPI) to count a time for when the next hop is down, and for communicating from the UP computer to a Control Plane (CP) computer that a next hop is down. The system facilitating identification of when the next hop transitions to up by sending a second series of pings from the UP computer to the next hop, for incrementing the KPI at the time when the next hop is up, and for communicating from the UP computer to the CP computer that the next hop is up.

## Description

### BACKGROUND

### 1. Field of the Disclosure

The present disclosure is related to User Plane Function (UPF) that can be situated in a Radio Access Networks (RAN) or Core network where the Core network is referred to as an area outside the RAN and contains user plane entities. More particularly, the present disclosure is related to a system for identifying and quantifying data path failures at the User Plane (UP).

### 2. Description of Related Art

3rd Generation Partnership Project (3GPP) has a defined network architecture for 5G, where a User Plane Function (UPF) is connected via the N6 LAN to the Internet. User Equipment (UE) traffic is routed from the core network to the Internet using the N6 or Service Gateway interface (SGi) or another network. The N6 LAN is the portion of a 5G network that carries data from the UPF to the Internet. The SGi interface is defined by the 3GPP as the interface between the Evolved Packet Core (EPC) and the Public IP network. Traffic through the interface can be identified by user IP, making user and service differentiation possible.

However, 3GPP does not define the action for notification by the User Plane (UP) User Plane Function or Serving / Packet Data Network Gateway User Plane Function (UPF or S/PGW-U) towards the Control Plane (CP) Sesson Management Function or Sesson / Packet Data Network Gateway Control Plane Function (SMF or S/PGW-C) when the N6 (or SGi) LAN is down. The PGW-U Gateway User plane function serves as the user data plane ingress and egress point to the EPC when control and user plane separation is in place.

The 3GPP specifications have defined the procedures for selection of available UP by the CP for Protocol Data Unit (PDU) or Public Data Network (PDN) connection setup. However, while the UP may be available, the interface (N6 or SGi) towards the Data Network Name (DNN) or Access Point Name (APN) may be down, meaning it is not able to route the packets. This being the case, if the UP is not able to notify the CP regarding the available interface status of the N6 (5G) or SGi (4G), the CP will select the UP that is incapable of routing the UP packets. This negatively impacts the operator's success rate in making session setups, as the calls are not completed due to the unavailability of SGi or N6 LAN.

Accordingly, a problem with current systems is that the CP can select a UP that does not have a currently functional N6/SGi-LAN connection.

Accordingly, there is a need for a telecom system that overcomes, alleviates, and/or mitigates one or more of the aforementioned and other deleterious effects of prior art telecom systems where the CP selects a UP that does not have a functional connection.

### SUMMARY

Accordingly, it would be advantageous to provide a telecom system that allows for the identification of the status of the next hop.

It is further desired to provide a telecom system and method that allows for an operator to select a UP with a functional interface towards a DNN/APN respectively.

It is also desired to provide a telecom system and method that allows for an operator to be able to define the Key Performance Indicators (KPIs) to count the downtime of the UP that has LANs, which are down.

It is also desired to provide a telecom system and method that allows for an operator to be able to predictably count the packets for effective charging when the LAN goes down and the CP selects an alternate UP with working LAN.

In current telecom systems, a situation may arise where a UP is connected to multiple SGi or N6 LAN next hops for different APN or DNN. At a given time, several next hops may be available, while several next hops are not available. Some next hops may be down for a few seconds, while others may be down for longer periods times. In such a case, the system and method according to one advantageous configuration provides for the UP to identify and quantify any N6 or SGi-LAN(s) that are currently down. This identification helps the operator to generate KPIs that count the duration for which the LAN is down and facilitates avoiding selection of the UPF. The KPI assists in identifying the revenue loss, due to the down time of LANs.

This means that the system provides for predictable packet counting and charging when the LAN goes down during active user sessions. Additionally, it may be possible that the LAN is down while certain sessions are active on a given UP. In this case, the UP may pause the packet counting and inform the CP, so that the CP can select a new UP for the session continuity as well as for correct packet counting.

Accordingly, in one configuration, the UP checks if the next hop is available. In one instance, this can be accomplished via ping at a configurable interval towards the next hop. The UP can then determine if the next hop is down. The UP can then notify the CP that the next hop is down. The UP may also update the NRF that the next hop is down.

In another configuration, the UP checks if the next hop that was down is not available. This could be accomplished by sending a ping at a configurable interval towards the next hop. If the UP identifies that the next hop is up, the UP can then notify the CP that the next hop is up. The UP may also update the NRF that the next hop is up.

In still another configuration, the UP checks if the next hop is down. The UP identifies all the sessions that are latched on this APN / DNN next hop. The UP may notify the CP about the usage count for each of the sessions and identify the sessions that are not able to send the data due to non-availability of next hop. The UP may further count the usage for each of the sessions not able to route the packets for the APN / DNN.

The above-described functionality offers a pragmatic approach to notify the CP, about the DNN / APN that are down or up. This facilitates selecting the UP that currently has routable and available LAN services.

The above-described functionality also provides for the UP to report the count of the usage of a given session to the CP until it has a routable SGi/N6 LAN interface. This helps the operator do appropriately count packets for a given UE. Additionally, this configuration allows the operator to count the time for which a given UPF is serviceable due to routable LAN.

For this application the following terms and definitions shall apply:
The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

In one configuration, a telecommunications system for determining a status of a next hop in a Radio Access Networks (RAN) where User Equipment (UE) is wirelessly coupled to radio equipment is provided, the system comprising: a User Plane (UP) computer coupled to the radio equipment, a Control Plane (CP) computer, the CP computer coupled to the UP computer, and a plurality of next hops selectable by the UP computer for transmitting of data to and from the UE. The system is provided such that the UP computer transmits a first series of pings from the UP computer to one of the plurality of next hops, and the UP computer determines from the first series of pings whether the next hop the first series of pings was sent to is down. The system is further provided such that when the UP computer determines the next hop is down, the UP computer increments a Key Performance Indicator (KPI) to count a time period for when the next hops i down, and the UP computer notifying the CP computer that the next hop is down.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating the 3GPP defined 5G network showing the position of the UPF;
FIG. 2 is a block diagram illustrating the 3GPP defined 4G network showing the position of the UPF;
FIG. 3 is a control diagram according to one of the configurations depicted in FIGS. 1 and 2 where the system identifies if the next hop is down;
FIG. 4 is a control diagram according to one of the configurations depicted in FIGS. 1 and 2 where the system identifies if the next hop is up; and
FIG. 5 is a control diagram according to one of the configurations depicted in FIGS. 1 and 2 where the system reports the session count for impacted sessions.

### DETAILED DESCRIPTION

Referring now to the drawings, wherein like reference numerals designate corresponding structure throughout the views.

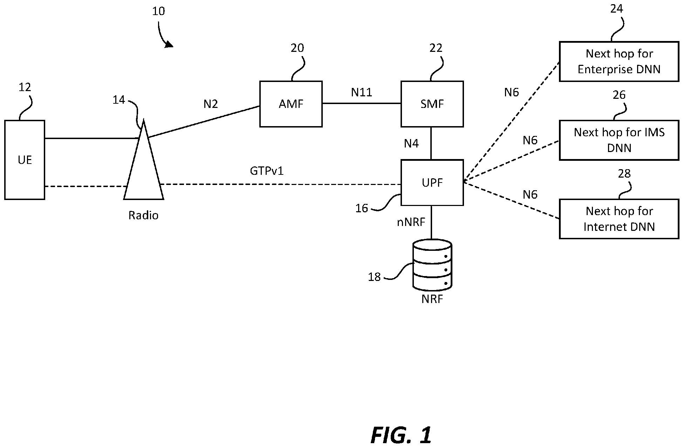

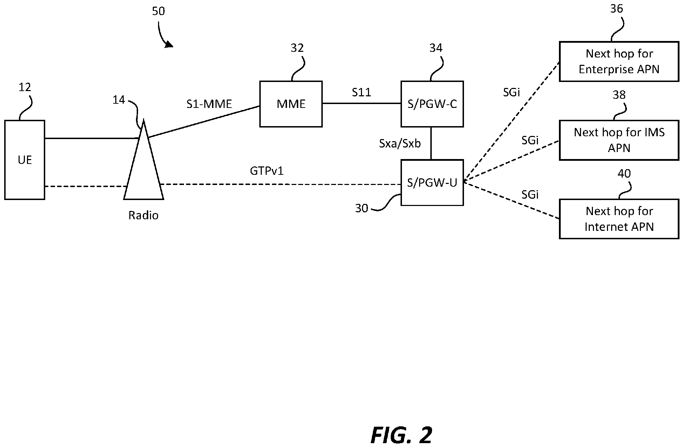

With reference to FIGS. 1 and 2, FIG. 1 illustrates a 3GPP defined 5G network showing the position of the User Plane Function (UPF), while FIG. 2 illustrates a 3GPP defined 4G network showing the position of the UPF.

Referring to FIG. 1, system 10 is illustrated in which User Equipment (UE) 12 is in contact with Radio 14, which in turn, is in contact with User Plane Function (UPF) 16 via GTPv1 connection. GTPV1 means the General Packet Radio Services (GPRS) Tunneling Protocol version 1 group of IP-based communications protocols used to carry GPRS within a Global System for Mobile communication (GSM) and Universal Mobile Telecommunications Systems (UMTS) networks. The UPF 14 is connected to Network Repository Function (NRF) 18 via the nNRF connection.

The Radio 14 is also connected via the N2 connection to Access and Mobility Management Function (AMF) 20, which is one of the control plane Network Functions (NF) of the 5G core network (5GC). It should be noted that the Radio Access Network (RAN) uses N2 (control plane) and N3 (user plane) to interface to the core and transparent N1 interface to the user devices. N1 is a transparent interface from 5G-UE to AMF of the core (via NG-RAN). The N1 interface is used by UE for transmitting non radio signaling between UE and AMF, which includes information related to connection, mobility and session related messages to the AMF, which handles cases related to connection, mobility messages, and forwards session management info to System Management Facility (SMF) 22. The N2 interface supports control plane signaling between RAN and 5G core covering scenarios related to UE context management, and PDU session/resource management procedures. N2 uses SCTP (NGAP) between 5GCN and access network.

AMF 20 is connected to SMF 22 via the N11 connection. SMF 22 produces records of activity on a mainframe computer that are recorded to a file. Types of activities that may be recorded by SMF 22 include errors, software usage, network activity, and much more. UPF 16 is further connected to SMF 22 via the N4 connection.

UPF 16 is then illustrated as variously connecting via the N6 connection to: Next hop for Enterprise Data Network Name (DNN) 24; to Next hop for IP Multimedia Subsystem (IMS) DNN 26; and to Next hop for internet DNN 28. It should be noted that DNN is a unique identifier used by the 5G core network to route traffic to a specific network slice.

Referring now to FIG. 2, a system 50 like that of FIG. 1 is illustrated including UE 12 connected to Radio 14, which is in turn, connected via GTPv1 to Packet Data Network Gateway User Plane (S/PGW-U) 30. Radio 14 is further connected to Mobility Management Entity (MME) 32 via the S1-MME connection, which is in turn, connected to Packet Data Network Gateway Control Plane (S/PGW-C) 34. Packet Data Network Gateway User Plane (S/PGW-U) 30 is connected to S/PGW-C 34 via the Sxa/Sxb connection. S/PGW-U 30 is variously connected via the SGi connection to: Next hop for Enterprise Access Point Name (APN) 36; to Next hop for IMS APN 38; and to Next hop for internet APN 40. As stated above, it should be noted that DNN is a unique identifier used by the 5G core network to route traffic to a specific network slice.

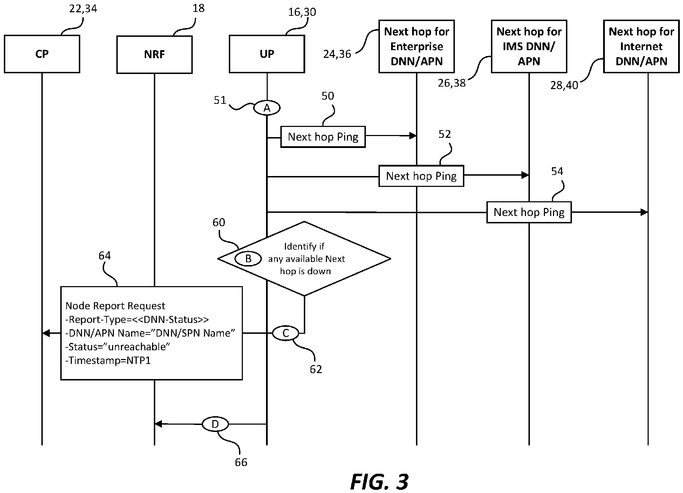

Referring now to FIGS. 3-5, control diagrams according to advantageous configurations for the system in FIGS. 1 and 2 are illustrated.

It should be noted that, while various functions and methods are described and presented in a sequence of steps, the sequence has been provided merely as an illustration of one advantageous embodiment, and that it is not necessary to perform these functions in the specific order illustrated. It is further contemplated that any of these steps may be moved and/or combined relative to any of the other steps. In addition, it is still further contemplated that it may be advantageous, depending upon the application, to utilize all or any portion of the functions described herein.

FIG. 3 illustrates a control sequence identifying the status of a next hop that is down. System 10 comprises a Control Plane (CP) 22, 34, a Network Repository Function (NRF) 18, and a User Plane (UP) 16, 30. FIG. 3 describes the process of determining the status of the next hop as a sequence of steps A - D described below.

At Step A the UP 16, 30 checks if the next hop is available 51. This is accomplished by continuous sending of a ping 50 at a configurable interval towards the next hop. In this instance, the next hop is selected for Enterprise DNN / APN 24, 36 depending on whether the system of FIG. 1 or FIG. 2 is used.

At step B after iterating for the configurable time, the UP 16, 30 will then identify that a given next hop is down 60. At this point, the UP 16, 30 will increment a Key Performance Indicator (KPI) to count the time for which the Enterprise DNN / APN 24, 36 is down.

At step C the UP 16, 30 notifies the CP 22, 34 that a given next hop is down 62. This can be done using a Packet Forwarding Control Protocol (PFCP) update or any other proprietary mechanism 64. A PFCP is a 3GPP protocol used on the Sx/N4 interface between the CP 22, 34 and the UP 16, 30. It is one of the main protocols introduced in the 5G Next Generation Mobile Core Network, but also used in the 4G/LTE EPC to implement the Control and User Plane Separation.

At step D the UP 16, 30 updates the NRF 18, if available in the network that the given next hop is down 66. This can be done using HTTP, HTTPS or HTTP2 POST/PUT respectively or any other proprietary mechanism.

It will be noted that the above was described in connection with using the next hop ping 50 identifying the Next hop for Enterprise DNN / APN 24, 36. However, as shown in FIG. 3 the next hop ping 52, 54 respectively, can be in connection with the Next hop for IMS DNN / APN 26, 38 or Next hop for internet DNN / APN 28, 40 based on the application.

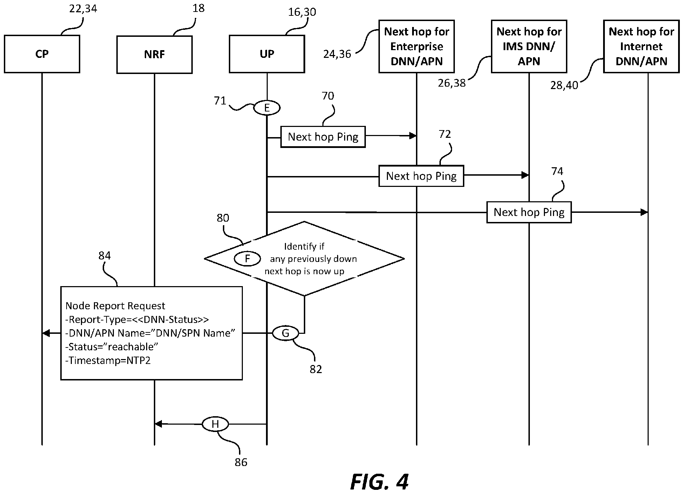

FIG. 4 illustrates a control sequence identifying the status of a next hop that is back up and, in this example, comprises a control sequence that is sequential to that described above. Additionally, the system is similar that that described in connection with FIG. 3 and will not be redescribed here.

At step E the UP 16, 30 checks if the next hop that was down has now become available 71. This is accomplished by continuous sending of a ping 70 at a configurable interval towards the next hop.

At step F after iterating for the configurable time, the UP 16, 30 identifies that a given next hop is now up 80. At this point, the UP 16, 30 will increment a KPI to count the time at which the Enterprise DNN / APN 24, 36 is now up.

At step G UP 16, 30 notifies the CP 22, 34 that a given next hop that may have previously been down is now up 82. This can be done using PFCP update or any other proprietary mechanism 84 as described previously in connection with FIG. 3.

At step H UP 16, 30 updates the NRF 18 (if available in the network), that the given next hop is up 86. This can be done using HTTP, HTTPS or HTTP2 POST/PUT respectively or any other proprietary mechanism.

As described in connection with FIG. 3, the above was described in connection with using the next hop ping 70 identifying the Next hop for Enterprise DNN / APN 24, 36. However, the next hop ping 72, 74 respectively, can be in connection with the Next hop for IMS DNN / APN 26, 38 or Next hop for internet DNN / APN 28, 40 based on the application as illustrated in FIG. 4.

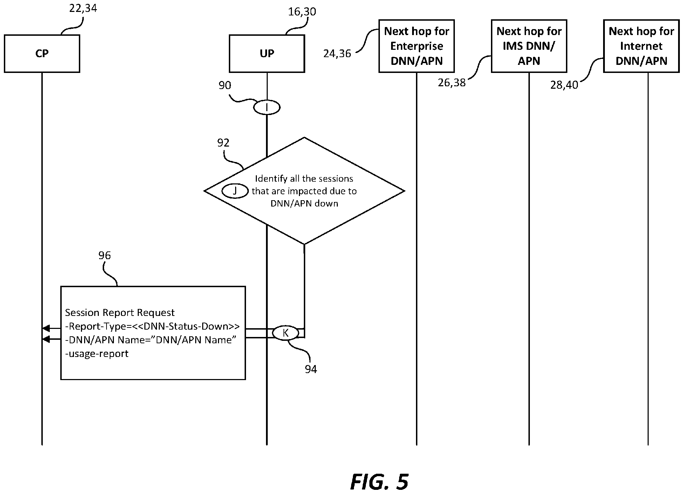

Referring now to FIG. 5, the counting of the usage report for impacted sessions is described.

At step I UP 16, 30 identifies the next hop that is down 90.

At step J UP 16, 30 identifies all the sessions that are latched on to this DNN / APN next hop 92 (e.g., Enterprise DNN / APN 24, 36, IMS DNN / APN 26, 38, or internet DNN / APN 28, 40).

At step K UP 16, 30 notifies the CP 22, 34 about the usage count for each of the session 94. It identifies the sessions that are not able to send the data due to non-availability of the next-hop 96. It also counts the usage for each of the sessions as they are not able to route the packets for the select APN/DNN.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A telecommunications system for determining a status of a next hop in a Radio Access Networks (RAN) where User Equipment (UE) is wirelessly coupled to radio equipment, the system comprising:
a User Plane (UP) computer coupled to the radio equipment;
a Control Plane (CP) computer, said CP computer coupled to said UP computer; and
a plurality of next hops selectable by said UP computer for transmitting of data to and from the UE;
said UP computer transmitting a first series of pings from said UP computer to one of the plurality of next hops;
said UP computer determining from the first series of pings whether the next hop the first series of pings was sent to is down;
wherein when said UP computer determines the next hop is down, said UP computer increments a Key Performance Indicator (KPI) to count a time period for when the next hop is down;
said UP computer notifying said CP computer that the next hop is down.

2. The telecommunications system according to claim 1, wherein the first series of pings is continuous for a first period of time.

3. The telecommunications system according to claim 2, wherein the first period of time is configurable.

4. The telecommunications system according to claim 1, wherein said UP computer notifies said CP computer that next hop is down via a Packet Forwarding Control Protocol (PFCP) mechanism.

5. The telecommunications system according to claim 1, further comprising:
a Network Repository Function (NRF) coupled to said UP computer;
wherein said UP computer updates said NRF that the next hop is down.

6. The telecommunications system according to claim 5, wherein said UP computer updates said NRF via HTTP, HTTPS or HTTP2 POST/PUT.

7. The telecommunications system according to claim 1, wherein the one of the plurality of next hops is selected from the group consisting of:
an enterprise Data Network Name (DNN) or Access Point Name (APN);
an IP multimedia subsystem DNN or APN; or
an internet DNN or APN.

8. The telecommunications system according to claim 1, wherein when said UP computer identifies that the one of the plurality of next hops is down, said UP computer identifies all sessions that are latched onto the next hop that is down and notifies said CP computer about a usage count for each of the identified sessions.

9. The telecommunications system according to claim 8, wherein said UP computer identifies failed sessions that are not able to send data due to non-availability of the next hop that is down and counts a usage for each session not able to route packets.

10. The telecommunications system according to claim 9, wherein said UP computer reports the usage count of a given session to the CP computer until it has a routable SGi/N6 LAN interface.

11. The telecommunications system according to claim 1, wherein,
said UP computer transmits a second series of pings from said UP computer to the next hop that was previously determined to be down;
said UP computer determining from the second series of pings whether the next hop that was down is now up;
wherein when said UP computer determines the next hop is up, said UP computer increments the KPI to count a time period at which the next hop is now up;
said UP computer notifying said CP computer that the next hop is up.

12. The telecommunications system according to claim 11, wherein said UP computer notifies said CP computer that the next hop is up via a Packet Forwarding Control Protocol (PFCP) mechanism.

13. The telecommunications system according to claim 11, further comprising:
a Network Repository Function (NRF) coupled to said UP computer;
wherein said UP computer updates said NRF that the next hop is up.

14. The telecommunications system according to claim 11, wherein the second series of pings is continuous for a second period of time.

15. The telecommunications system according to claim 14, wherein the second period of time is configurable.
